# EUROPEAN PATENT APPLICATION

(11) **EP 1 560 088 A2**
(43) Date of publication of application: **03.08.2005**
(21) Application number: 04257667.8
(22) Date of filing: 09.12.2004
(51) Int. Cl.: G05B 19/042

(54) **Software download system for controller**

(30) Priority: 25.12.2003 JP 2003429101
(71) Applicant: FANUC LTD, Minamitsuru-gun, Yamanashi 401-0597 (JP)
(72) Inventor: Hada, Kouji, Minamitsuru-gun, Yamanashi 401-0502 (JP); Ando, Hiroshige, Minamitsuru-gun, Yamanashi 401-0310 (JP); Noda, Hiroshi, Minamitsuru-gun, Yamanashi 401-0511 (JP)
(74) Representative: Billington, Lawrence Emlyn

(57) **Abstract**

A software download system for a controller is operable with a controller (1). A GPS receiver (12) is provided within the controller (1). When a customer for the controller (1) orders option software, ID information identifying the controller (1), and positional information acquired by the GPS receiver (12), are transmitted to a management apparatus (3) on the side of the controller manufacturer. The management apparatus (3) collates the received ID information and positional information with information stored in storage means (34) of its own and, as a result, transmits the option software to the controller (1) via a communication line (2) if it is determined that there is no problem on transmission. The transmitted option software is then downloaded into the controller (1).

## Description

### BACKGROUND OF THE INVENTION

### Field of the Invention

The present invention relates to a software download system for downloading software to a controller.

### Description of the Related Art

As software for controlling a controller such as a numerical control apparatus, there are basic software and option software optionally added by an user. This option software may be added when the controller or a machine provided for the controller is sold, or may additionally be purchased after the controller is once purchased.

When option software is added to a controller which has already purchased, a salesman of the option software goes to an place where the controller is actually installed, and downloads the option software into the controller. In this case, the salesman who goes to the place can confirm the purchaser of the controller, and confirm whether or not selling of the software is against an export restriction, whereby there is no problem.

By the way, though a salesman does not directly go to a place where the controller is actually installed, option software can be sold via communication means such as Internet. However, in the case where a controller is illegally exported from the proper export place to the export restricted area, option software cannot be sold for the controller because of export restriction regulation. When selling option software using communication means, it is not possible to determine whether or not the destination of selling the controller is outside the export restricted area. Therefore, conventionally, no software is sold via the communication means such as Internet.

In some instances, the controller itself is not subject to the export restriction, but the software to be added to the controller may be subject to the export restriction. In those instances, the software can not be sold unless the destination of sale is identified, thus option software cannot be sold via communication means.

### SUMMARY OF THE INVENTION

This invention relates to a software download system for downloading the software for a controller from a management apparatus via communication means into the controller.

According to a first aspect of the invention, the controller comprises a GPS receiver for receiving the positional information of the controller from a GPS, and a transmitter for transmitting the information including the positional information of the controller to the management apparatus. Also, the management apparatus comprises receiving means for receiving the information transmitted from the transmitter of the controller, storage means for storing the export restricted area information, determination means for determining whether or not the controller is in an export restricted area based on the export restricted area information stored in the storage means and the received positional information of the controller, and transmitting means for transmitting the software of the controller to the controller, when the determination means determines that the controller is outside the export restricted area.

In this software download system, the storage means stores advisability of selling each software to the export restricted area, and the determination means determines whether or not it is permitted to sell the desired software, transmitted from the controller, to the export restricted area, and if it is determined that selling of the software is not permitted, the determination means determines whether or not the controller resides in the export restricted area.

In the software download system, the information transmitted from the controller includes the ID information of the controller, and the storage means of the management apparatus includes the ID information of the controller and the customer information.

According to a second aspect of the invention, there is provided a software download system, wherein a controller comprises a GPS receiver for receiving the positional information of the controller from a GPS, and a transmitter for transmitting the information including the positional information of the controller and the ID information specifying the controller to the management apparatus. Also, a management apparatus comprises receiving means for receiving the information transmitted from the transmitter of the controller, storage means for storing the ID information of the controller and the position where the controller is installed, determination means for determining whether or not the received ID information and positional information coincide with the ID information and positional information stored in the storage means, and transmitting means for transmitting the software of the controller via the communication means to the controller, when a determination result by the determination means is affirmative.

The software download system according to the present invention having the above configuration allows option software for a controller, subject to export restriction, to be sold only outside an export restriction area via a communication line so that the software can be directly downloaded into the controller installed there, and the system does not allow the software to be transmitted the export restriction area. Therefore, the option software of the controller is sold to the owner of the controller via the communication line without causing any problem such as violation of export restriction.

### BRIEF DESCRIPTION OF THE DRAWINGS

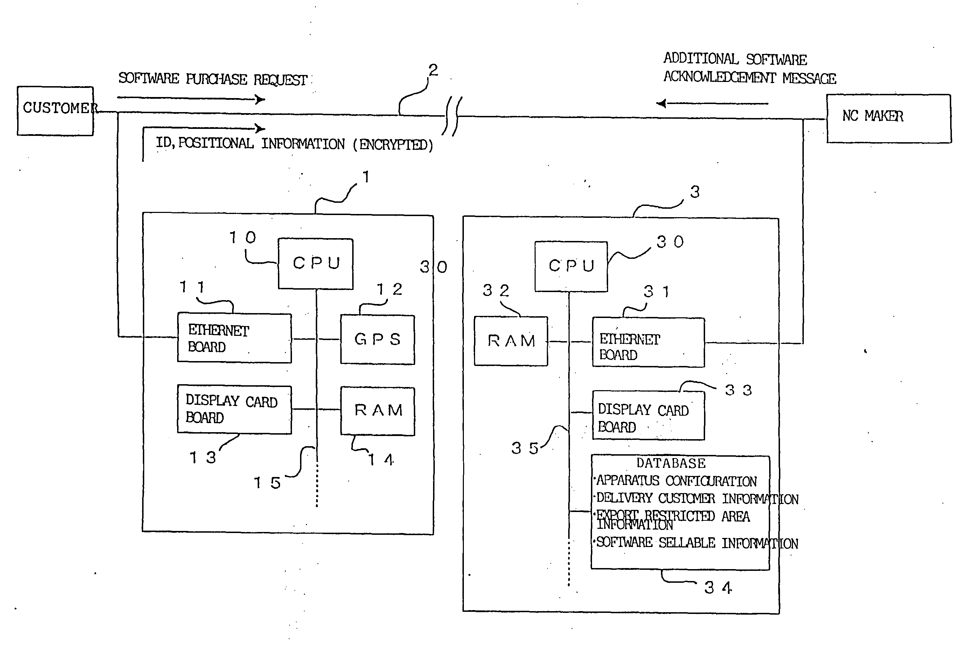

FIG. 1 is a block diagram schematically showing a software download system according to one embodiment of the invention.

### DESCRIPTION OF THE EMBODIMENTS

Referring to a block diagram of FIG. 1, a software download system according to one embodiment of the invention will be described below. In this embodiment, a controller into which the software is downloaded is a numerical control apparatus.

The controller (numerical control apparatus) 1 comprises a processor 10, a display card 13, to which a display unit is connected, for controlling the display unit, and a memory such as a RAM 14, and these components are interconnected via a bus 15. Moreover, in this invention, an Ethernet board 11 and a GPS receiver 12 for a GPS (Global Positioning System) are connected via the bus 15. The Ethernet board 11 is connected to communication means such as Internet to constitute transmitting and receiving means 2.

Also, a management apparatus 3 connected to the communication means 2 is provided on the maker side of the controller 1. In this management apparatus 3, a processor 30 is connected to an Ethernet board 31 constituting transmitting and receiving means, a memory such as a RAM 32, and a display card 33, to which a display unit is connected, for controlling the display unit. Moreover, storage means 34 such as a hard disk storing a database for a customer to which the controller 1 is sold is connected to a bus 35.

This storage means 34 stores, for each ID information identifying the sold controller (numerical control apparatus), information of apparatus configuration, customer on delivered side, export restricted area and advisability of exporting of each software to the export restricted area, as database.

When a customer of the controller 1 purchases an option software, the controller 1 is connected to the communication means 2, the information specifying the option software to be purchased such as option software name is transmitted to the management apparatus 3 on the maker side. Also, the controller 1 encrypts the ID information inherent to its own and the positional information received by the GPS receiver 12, and transmits the encrypted information via the communication means 2 to the management apparatus 3.

The management apparatus 3 decrypts the ordered option software name, and the received encrypted information and acquires the ID information and positional information of the controller 1. Thus, the determination means composed by software determines whether or not it is permitted to sell the option software by comparing the obtained information with the database stored in the storage device 34.

As a method for confirming whether or not it is permitted to sell an option software, if the received ID and positional information of the controller on the customer side coincide with the information stored in the database of the management apparatus 3, then it is considered that there is no problem with the destination of sale, and the ordered option software is transmitted to the controller 1 on the customer side via the communication means 2. Also, if the received ID and positional information do not coincide with the information stored in the database, a confirmation message for confirming the purchase of software is transmitted to the customer who wants to purchase the software, and only when there is no problem, the ordered option software is transmitted to the customer. Particularly, an option software is not sold if the destination of sale is within an export restricted area.

Also, another method for confirming whether or not it is permitted to sell an option software involves determining whether or not the received installation location (positional information) of the controller 1 is within the export restricted area stored in the database, and if it is outside the export restricted area, determining that there is no problem with the destination of sale, whereby the ordered option software is transmitted to the controller 1 on the customer side via the communication means 2 so that the option software is sold. On the other hand, if the received positional information is within the export restricted area, the ordered option software is not transmitted and sold.

Moreover, in the case where some option software is permitted to be sold in an export restricted area, the information indicating advisability of selling each option software to an export restricted area is stored in the database, and it is determined whether or not it is permitted to sell the ordered option software to the export restricted area, based on this database. And when it is permitted to sell it, the option software is transmitted and sold to the customer of the controller installed in the export restricted area. Also, an option software not permitted to be sold to the export restricted area can be sold only outside the export restricted area.

## Claims

1. A software download system for downloading software for a controller from a management apparatus via communication means into said controller;
wherein said controller comprises:
a GPS receiver for receiving the positional information of said controller from a GPS; and
a transmitter for transmitting the information including the positional information of said controller to said management apparatus; and
wherein said management apparatus comprises:
receiving means for receiving the information transmitted from said transmitter of said controller;
storage means for storing the export restricted area information;
determination means for determining whether or not said controller is in an export restricted area based on said export restricted area information stored in said storage means and the received positional information of said controller; and
transmitting means for transmitting the software of said .
controller to said controller, when said determination means determines that said controller is outside the export restricted area.

2. The software download system according to claim 1, wherein said storage means stores advisability of selling each software to the export restricted area, and said determination means determines whether or not it is permitted to sell the desired software, transmitted from the controller, to the export restricted area, and if it is determined that selling of the software is not permitted, said determination means determines whether or not the controller resides in the export restricted area.

3. The software download system according to claim 1 or 2, wherein the information transmitted from said controller includes the ID information of said controller, and the storage means of said management apparatus includes the ID information of the controller and the customer information.

4. A software download system for downloading software for a controller from a management apparatus via communication means into said controller;
wherein said controller comprises:
a GPS receiver for receiving the positional information of said controller from a GPS; and
a transmitter for transmitting the information including the positional information of said controller and the ID information specifying said controller to said management apparatus; and
wherein said management apparatus comprises:
receiving means for receiving the information transmitted from said transmitter of said controller;
storage means for storing the ID information of said controller and the position where said controller is installed;
determination means for determining whether or not the received ID information and positional information coincide with the ID information and positional information stored in said storage means; and
transmitting means for transmitting the software of said controller via said communication means to said controller, when a determination result by said determination means is affirmative.
